Europäisches Patentamt

European Patent Office

Office européen des brevets

(11) Publication number: **0 278 577 B1**

(12) **EUROPEAN PATENT SPECIFICATION**

(45) Date of publication of patent specification: **06.05.92**  (51) Int. Cl.⁵: **G01B 11/06**

(21) Application number: **88200230.6**

(22) Date of filing: **09.02.88**

(54) **A process for determining thicknesses of layers, application thereof in determining certain interactions and a means for carrying out this process.**

(30) Priority: **12.02.87 NL 8700337**

(43) Date of publication of application:
**17.08.88 Bulletin 88/33**

(45) Publication of the grant of the patent:
**06.05.92 Bulletin 92/19**

(84) Designated Contracting States:
**AT BE CH DE ES FR GB GR IT LI LU NL SE**

(56) References cited:
**EP-A- 0 067 921**
**GB-A- 2 153 071**
**US-A- 2 666 355**

**IBM J. RES. DEVELOP., November 1973, pages 472-489, New York, US; P.S. HAUGE et al.: "Design and operation of ETA, an automated ellipsometer"**

**SOLID-STATE ELECTRONICS, vol. 12, no. 10, October 1969, pages 765-774, Pergamon Press, GB; N.V. SMITH et al.: "Determination of the thickness and refractive index of films on silicon using split-beam ellipsometry"**

**PHYSICS IN MEDICINE & BIOLOGY, vol. 22, no. 3, May 1977, pages 422-430, London, GB; R.M.A. AZZAM et al.: "Kinetics of protein adsorption and immunological reactions at a liquid/solid interface by ellipsometry"**

**Analytical Biochemistry, No. 145, 1985, pp. 106-112, H. Arwin, "A Reflectance Method for Ouantification of Immunological Reactions on Surfaces"**

(73) Proprietor: **AKZO N.V.**
**Velperweg 76**
**NL-6824 BM Arnhem(NL)**

(72) Inventor: **Dubbeldam, Gerrit Cornelis**
**Karel van Gelrestraat 6A**
**NL-6901 GE Zevenaar(NL)**

(74) Representative: **Sieders, René et al**
**AKZO N.V. Patent Department (Dept. CO)**
**P.O. Box 9300**
**NL-6800 SB Arnhem(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.18/2.0)

**Description**

The invention relates to a process for determining the thickness and/or change in thickness of a thin layer applied to a carrier, the carrier and the thin layer being radiated with a plane polarised light beam and the light reflected by the carrier and the thin layer being detected, the detected light being used for the determination of the thickness and/or change in thickness of the thin layer.

The invention also relates to an apparatus for determining the thickness of a layer.

The process and apparatus according to the invention are particularly useful for examining protein/carrier and protein/protein reactions .

A process as described above and application thereof for quantification of immunological reactions on surfaces is known from an article in Analytical Biochemistry 145 (1985), pp. 106-112. In this well-known method light polarized in the plane of incidence at angle virtually equal to the (pseudo) Brewster angle, is directed to the carrier. The intensity of the reflected light is measured. With the build-up of a thin layer on the carrier the reflection value of the reflectance will change, and hence so will the intensity. Thus, the change in intensity forms a measure of the thickness of the thin layer.

To the known process there is the problem of its being susceptible to fluctuations in intensity of the light source used. For, (a change in) intensity is used as a direct measure of (a change in) thickness. Although this source of errors may be eliminated to a considerable extent by e.g. the use of reliable laser light sources such as a helium-neon laser, which provides a high intensity at a stable wave length, the intensity dependence of the process does lead to restrictions in this way, considering that a helium-neon laser is not necessarily universally applicable. Also, in the well-known method both the intensity of the light beam and the reflection and transmission properties of all optical components in the optical path will have to be known.

The object of the invention is to provide an improved process which is no longer sensitive to the intensity of the light source used. To this end the process according to the invention as set out above is characterised in that

a. the plane polarised light beam is directed at an angle equalling the Brewster angle for the interface between the carrier and the continuous phase;

b. the light reflected by the carrier and thin layer is split into a p-polarised and an s-polarised component;

c. the respective intensities $(I_s)_r$ and $(I_p)_r$ of the reflected s-polarised and p-polarised components are simultaneously measured; and

d. a quantity M

$$M = \frac{(I_s)_r - (I_p)_r}{(I_s)_r + (I_p)_r} = \frac{R_s - m * R_p}{R_s + m * R_p}$$

is determined in which

$R_s$ is the ratio of the intensities $(I_s)_r$ and $(I_s)_i$ of the reflected and incident s-components, respectively;

$R_p$ is the ratio of the intensities $(I_p)_r$ and $(I_p)_i$ of the reflected and incident p-components, respectively; and

m is the ratio of the intensities $(I_p)_i$ and $(I_s)_i$ of the incident p- and s-components, respectively; and

M is related to the thickness and refractive index of the thin layer.

By "continuous phase" is meant the medium contacting the carrier. This medium may be a protein solution.

Compared with the process known from Anal. Biochemistry 145(1985), pp. 106-112, the invention not only provides a process which is insensitive to fluctuations in the intensity of the light source, but offers additional advantages. The latter reside in that the measurement sensitivity may be optimised and the relation between M and the thickness of the thin layer to a large extent and over a broad range be made linear. This may easily be achieved by proper adjustment of the value of m. In the case of a laser as the light source, m can be simply changed by rotating the laser about its optical axis.

It should be added that processes for determining layer thicknesses of which the measuring results do not directly vary with the intensity of the light reflected by the substrate are known in themselves from a great many publications. Those processes, however, are always particular embodiments of ellipsometry determinations. The drawback to such processes is that for each determination of the layer thickness at least two measurements are required, viz. one for measuring the magnitude of Ψ, the "restored azimuth",

and one for $\triangle$, the "differential phase change". These two quantities represent the change in polarisation state which the p- and s-components of a polarised light beam undergo upon reflection at a certain interface. From $\Psi$ and $\triangle$ the thickness may be determined.

In IBM J. Res. Develop. of November 1973, pp. 472-489 it has been suggested that the analyser be rotated, so that the time interval between the two measurements can be considerably reduced. But there still remains the drawback of requiring a computer program for the determination of the layer thickness from the ellipsometric parameters $\Psi$ and $\triangle$.

U.S. Patent Specification 2 666 355 describes a continuous determination of the layer thickness using a conventional ellipsometer. Although in the determination by it of the growth of a protein layer different measuring settings are not required for each determination, and the intensity of the reflected light appears to be a measure of the thickness of the thin layer, such a method offers hardly any advantages, if at all, over the afore-mentioned method discussed in Anal. Biochemistry.

Finally, mention is made of an article by Smith et al. in Solid State Electronics, volume 12, No. 10, October 1967, Pergamon Press, pp. 765-774. This discloses an ellipsometer by means of which the thickness and refractive index of films on silicon may be determined. This determination is based on the measurement of the quantities $\Psi$ and $\triangle$ already mentioned above. These are related to the p- and s-components of the incident and reflected beams. In the measurement of both $\Psi$ and $\triangle$ a polariser is successively placed in the reflected and incident beams. A detector assembly is provided in the reflected beam for simultaneous detection of the reflected p- and s-components. For carrying out the measurement of $\triangle$ the detection assembly is made rotatable about an axis colinear with the reflected beam. This ellipsometer does not allow a continuous measurement of the thickness of the film, said measurement being derived from a family of curves representing the dependence of $\Psi$ and $\triangle$ on the refractive index and the thickness.

In a preferred embodiment of the process according to the invention for determining the degree of growth of organic layers on a carrier, the latter was previously coated with a thin intermediate layer of a transparent inorganic material or of a transparent organic polymer, the intermediate layer having such a thickness that there is an almost linear relation between the quantity M and the thickness of said layer. In this case the measuring result is, within wide limits, independent of the thickness and the index of refraction of the intermediate layer.

Suitably, use is made of a process characterised in that the carrier is of silicon and the thin intermediate layer is a transparent layer of an organic polymer having a thickness of about

$$0.15 \, \tfrac{\lambda}{n}$$

where A is the wavelength of the incident plane polarised beam (6) and n is the refractive index of said intermediate layer.

It has been found that above a certain thickness value, the relationship between the quantity M measured according to the invention and the thickness of a layer present on a substrate is virtually linear over a fairly wide range. If the process is used to determine whether or not organic layers, e.g. protein layers from a protein solution, have formed, it is preferred for the accuracy of the determination that the measurement be carried out in said linear area. This can be done by first applying to the substrate, which may be a silicon or glass slide, a thin transparent layer of an inorganic material such as quartz or a thin transparent layer of an organic polymer such as polystyrene or nylon. Using a polystyrene layer with a thickness of over 40 nm, e.g. about 50 nm, and using a He-Ne laser (wavelength 632,8 nm) as a light source, will result in the preferred linear relation between the quantity M and the thickness of a layer formed on the polystyrene.

Preferably, m is adjusted to a value for which the maximum value of $R_s$ is about equal to the maximum value of $m * R_p$.

For carrying out the process according to the invention, several variants may be used for determining the growth of layers from a solution. In a first variant a substrate, which may be of silicon, is placed in a cell containing the solution to be examined, the laser beam being directed to the substrate at the desired angle. The reflected beam is received outside the cell and processed in the aforementioned way.

For direct measurements in cloudy liquids this first variant is not quite satisfactory. In such cases it is preferred that use be made of a second variant of the process according to the invention, characterised in that a prism is used as the carrier, the light being directed to the prism in such a way that it will enter and leave through the respective lateral faces and be reflected on the base face on which the thin layer to be measured is present.

In the first variant, in which a substrate of silicon is placed in a cell, use may preferably be made of a light source in the form of a helium neon laser. The second variant requires the substrate to be transparent to the radiation of the light source used. As silicon is impervious to the radiation of a helium neon laser, the second variant calls for the use of substrate material other than a glass prism may be used, preferably one having the highest possible index of refraction. Instead of a helim neon laser a semiconductor laser emitting radiation at a wavelength of 1,53 $\mu$m may be used, which silicon is transparent to.

The invention also pertains to an apparatus for determining the thickness of a layer, comprising a substrate for carrying said layer, a light source for directing a plane polarised light beam toward said substrate, means for setting the angle of incidence of the light beam to the Brewster angle of the interface between the carrier and the continuous phase, and means for detecting the light reflected by said substrate. This apparatus is characterised in that it comprises

a. means for adjusting the polarisation plane of the incident beam of the light source;

b. a beam splitter-splitting the reflected polarised beam into a p-polarised component and an s-polarised component;

c. two detectors for detecting the intensities of said p-polarised and s-polarised components, respectively; and

d. a processing unit for determining a quantity M

$$M = \frac{(I_s)_r - (I_p)_r}{(I_s)_r + (I_p)_r} = \frac{R_s - m * R_p}{R_s + m * Rp}$$

in which

$R_s$ is the ratio of the intensities $(I_s)_r$ and $(I_s)_i$ of the reflected and incident s-components, respectively;

$R_p$ is the ratio of the intensities $(I_p)_r$ and $(I_p)_i$ of the reflected and incident p-components, respectively;

m is the ratio of the intensities $(I_p)_i$ and $(I_s)_i$ of the incident p- and s-components, respectively; and

M is related to the thickness and refractive index of the thin layer.

The invention may find very suitable application for determining certain interactions, such as protein/carrier and protein/protein interactions. In such cases the process according to the invention is applied a number of times using, in succession, different protein solutions. In experiments in which the process according to the invention was applied, a substrate, which had been coated with a thin layer of polystyrene of about 50 nm, was successively brought into contact with three protein solutions, viz. anti-HCG, BSA and HCG. On the thin layer of polystyrene there was found to occur a growth of anti-HCG. In the solution with BSA no change in thickness was found to occur and in the solution with HCG an increase in layer thickness took place. Thus, the presence of HCG could be demonstrated, provided that use is not made of a known HCG solution but of a solution of which it is suspected that it might contain HCG. A suitable means for use in said application of the process according to the invention is a plate-shaped or prism-shaped carrier, one surface of which is coated with a thin layer of an organic polymer material, e.g. polystyrene, of a thickness of at least 40 nm. With such carriers said process may be carried out in the linear measuring range.

The invention will be further described with reference to the accompanying drawing in which:

- Figure 1 is a schematic representation of a measuring arrangement for carrying out a first variant of the process according to the invention,

- Figure 2 is a similar reporesentation of a second variant, and

- Figure 3 contains a graph in which the increase in layer thickness is plotted against time for the use of the second variant of the process according to the invention.

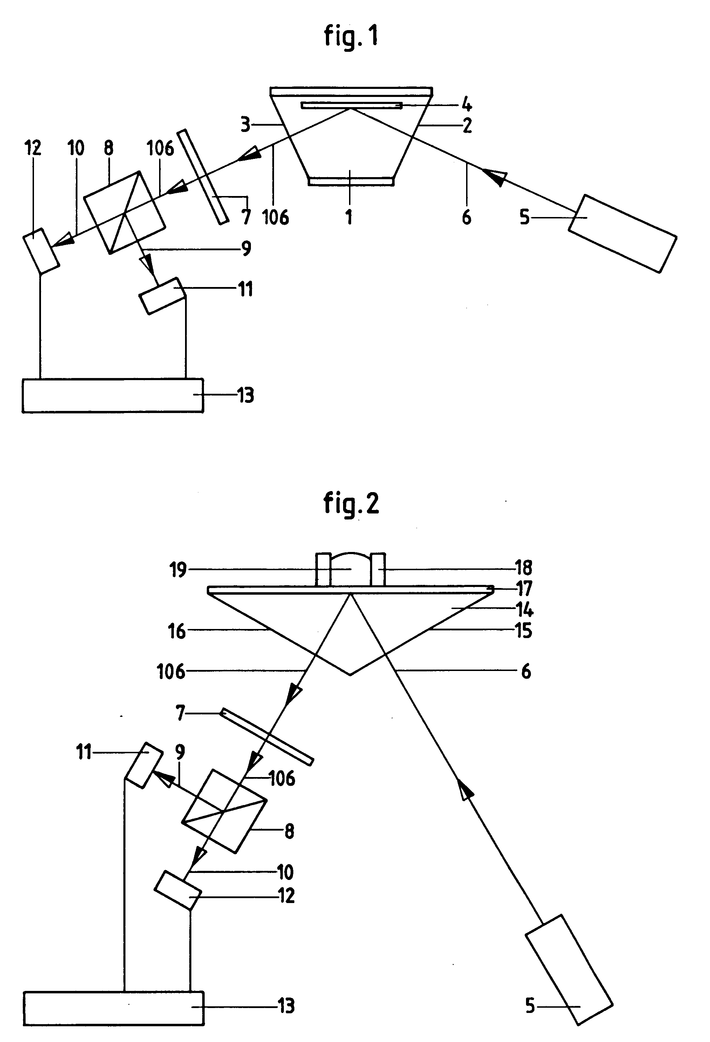

Figure 1 is a plan view of a schematically represented measuring arrangement comprising a cell 1 equipped with windows 2 and 3, which constitute the side walls of the cell 1. In the cell 1 is contained a liquid, e.g. a protein solution, and in the cell and the liquid is placed a substrate 4. The substrate 4 may be e.g. a silicon slide coated with a layer of polystyrene of about 60 nm. By a laser source 5, e.g. a helium neon laser, a polarized beam 6 is directed through the window 2 to the substrate 4. The set up is such that the beam 6 hits the substrate 4 virtually at the Brewster angle. The beam 6 is reflected on the substrate 4 and a thin layer which may be present on it, and leaves the cell 1 by the window 3. Via a suitable filter 7 the reflected beam 106 hits the polarizing beam splitter 8, by which the beam is split into a p-polarized beam 9 and an s-polarized beam 10. These beams 9 and 10, respectively, are subsequently received by the detectors 11 and 12, respectively. The detectors are connected to a schematically indicated electronic processing unit 13, which derives from the detector signals a quantity $M = (R_s-mR_p)/(R_s+mR_p)$. For the

4

ratio between the reflected p-polarized and s-polarized light to be in equilibrium the polarization direction of the plane polarized laser beam 6 is chosen in such a way that the ratio of the intensities $(I_p)_i$ and $(I_s)_i$ of the p-polarized beam and the s-polarized beam components, respectively is 3:1. In that case the measuring value M determined by the electronic unit 13 corresponds to: $M = (R_s\text{-}3R_p)/(R_s + 3R_p)$. This situation is obtained if the polarization direction of the laser beam 6 is at an angle of 30° to the plane of incidence. This quantity M is intensity-independent and is a function of the thickness of a layer present on the substrate 4. In the absence of a layer on the substrate 4, $R_p = 0$ and $M = 1$, since the beam 6 hits the substrate at the Brewster angle. The relation between the layer thickness and M appears to be virtually linear at a layer thickness of from about 40 nm. For investigation into the growth of relatively thin protein layers it is therefore recommended that the substrate 4 be coated with a layer of polystyrene of about 50 nm. This may be done for instance by spincoating.

Although satisfactory results may be achieved using the measuring arrangement according to Figure 1, measurement with it in cloudy or absorbing liquids is hardly possible if at all. Moreover, this method requires a relatively large amount of solution. These disadvantages may be avoided by measuring the reflection via the substrate, so that the light no longer passes through the solution. A suitable measuring set up for this is depicted schematically in Figure 2. In this figure and in Figure 1 like parts are referred to by like numerals.

In Figure 2 the substrate 14 is an equilateral prism, which may be made of e.g. heavy flint glass ($n_D$ = 1,784). The equal planes 15 and 16 of the prism 14 are provided with an anti-reflection coating. The base face is coated with a thin layer 17 of polystyrene (thickness about 50 nm). Such a layer may be obtained by spin-coating.

The prism 14 is cut in such a way that at right angles of incidence to the lateral faces the light will hit the base face at the Brewster angle for the interface of glass-water (37°). For the ratio between the reflected p-polarized light and the s-polarized light to be in equilibrium, such a polarization direction is arranged of the plane polarized beam 6 of the helium neon laser 5 as will result in a ratio of the intensities of the p-polarized beam 9 and the s-polarized beam 10 of 50:1. In that case the value M measured by the electronic unit 13 is $M = (R_s\text{-}50R_p)/(R_s + 50R_p)$, provided that the polarization direction of the laser beam 6 is at an angle of 8,05° to the plane of incidence.

On the base face of the prism 14 is placed a ring 18, which serves as a cell and may be made of polystyrene. A suitable ring would be one which has an inner diameter of 6 mm, an outer diameter of 10 mm and a height of 5 mm. The ring may be attached to the prism by putting a drop of toluene between the underside of the ring 18 and the prism 14. The solutions to be examined may be introduced into the cell 18 and sucked up from it without removing the prism from the measuring arrangement. In Figure 2 a solution 19 is present in the cell. Instead of using a cell in the form of a ring or the like it is of course also possible to conduct measurements by the immediate application to the layer 17 of drops of the solutions to be examined.

## Example

The test solution as schematically depicted in Figure 2 was used in an examination of several protein solutions. Three protein solutions were successively introduced into the cell of the measuring arrangement, viz:

a. anti-HCG 147[b]     100 mg/l
b. BSA     100 mg/l
c. HCG     100 mg/l

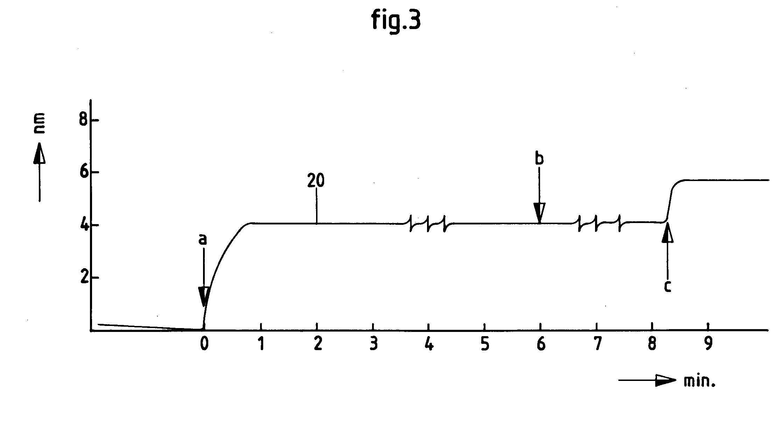

The solutions were solutions in phosphate buffer, pH 7,5. Beforehand and in between introduction of the various solutions, the cell was rinsed with a clear buffer solution. The results are given in the graph of Figure 3.

In the graph the thickness in nm of a built-up protein layer is plotted against the time in minutes. The part of the curve 20 before $t = 0$ relates to the rinsing with the clean buffer solution. At $t = 0$ the anti-HCG 147[b] was introduced into the cell (arrow a in the graph). Within a minute a layer of about 4 nm was found to have built up. This thickness remains virtually constant in time in spite of rinsing around $t = 4$. At $t = 6$ the BSA solution was introduced into the cell (indicated by the arrow b in the graph). This turned out to have next to no influence on the thickness of the layer already present. After rinsing around $t = 7$ the HCG solution was introduced into the cell shortly after $t = 8$. In a very short period of time the thickness of the layer therefore increased to almost 6 nm.

The example shows that the process according to the invention is highly suited to demonstrating the presence of certain proteins.

**Claims**

1. A process for determining the thickness and/or change in thickness of a thin layer applied to a carrier, the carrier and the thin layer applied to it being radiated with a plane polarised light beam and the light reflected by the carrier and the thin layer being detected, the detected light being used for the determination of the thickness and/or change in thickness of the thin layer, characterised in that

   a. the plane polarised light beam (6) is directed at an angle equalling the Brewster angle for the interface between the carrier (4, 14) and the continuous phase;

   b. the light (106) reflected by the carrier (4, 14) and thin layer is split into a p-polarised (9) and an s-polarised component (10);

   c. the respective intensities $(I_s)_r$ and $(I_p)_r$ of the reflected s-polarised and p-polarised components are simultaneously measured; and

   d. a quantity M

$$M = \frac{(I_s)_r - (I_p)_r}{(I_s)_r + (I_p)_r} = \frac{R_s - m * R_p}{R_s + m * R_p}$$

   is determined in which

   $R_s$ is the ratio of the intensities $(I_s)_r$ and $(I_s)_i$ of the reflected and incident s-components, respectively;

   $R_p$ is the ratio of the intensities $(I_p)_r$ and $(I_p)_i$ of the reflected and incident p-components, respectively; and

   m is the ratio of the intensities $(I_p)_i$ and $(I_s)_i$ of the incident p- and s-components, respectively; and

   M is related to the thickness and refractive index of the thin layer.

2. A process according to claim 1, characterised in that use is made, for determining the degree of growth of organic layers on a carrier, of a carrier (4, 14) previously coated with a thin intermediate layer (17) of a transparent inorganic material or of a transparent organic polymer, the intermediate layer (17) having such a thickness that there is an almost linear relation between the quantity M and the thickness of said layer.

3. A process according to claim 2, characterised in that the carrier is of silicon and the thin intermediate layer (17) is a transparent layer of an organic polymer having a thickness of about

   $0.15 \frac{\lambda}{n}$

   where $\lambda$ is the wavelength of the incident plane polarised beam (6) and n is the refractive index of said intermediate layer (17).

4. A process according to any one of claims 1 through 3, characterised in that m is adjusted to a value for which the maximum value of $R_s$ is about equal to the maximum value of m * Rp.

5. A process according to any one of the claims 1 through 4, characterised in that a prism (14) is used as the carrier, the light (6) being directed to the prism (14) in such a way that it will enter and leave through the respective lateral faces (15, 16) and be reflected on the base face on which the thin layer to be measured is present.

6. An apparatus for determining the thickness of a layer, comprising a carrier for carrying said layer, a light source for directing a plane polarised light beam toward said substrate, means for setting the angle of incidence of the light beam to the Brewster angle for the interface between the carrier and the continuous phase, means for detecting the light reflected by said substrate, characterised in that said apparatus comprises

   a. means for adjusting the polarisation plane of the incident beam (6) of the light source (5);

   b. a beam splitter (8) splitting the reflected polarised beam (106) into a p-polarised component (9) and an s-polarised component (10);

   c. two detectors (11, 12) for detecting the intensities of said p-polarised and s-polarised components (9, 10), respectively; and

d. a processing unit (13) for determining a quantity M

$$M = \frac{(I_s)_r - (I_p)_r}{(I_s)_r + (I_p)_r} = \frac{R_s - m * R_p}{R_s + m * Rp}$$

in which

$R_s$ is the ratio of the intensities $(I_s)_r$ and $(I_s)_i$ of the reflected and incident s-components, respectively;

$R_p$ is the ratio of the intensities $(I_p)_r$ and $(I_p)_i$ of the reflected and incident p-components, respectively;

m is the ratio of the intensities $(I_p)_i$ and $(I_s)_i$ of the incident p- and s-components, respectively; and

M is related to the thickness and refractive index of the thin layer.

7. An apparatus according to claim 6, characterised in that the carrier (4, 14) is of silicon and the intermediate layer (17) is a transparent layer of an inorganic material or of an organic polymer, said intermediate layer having a thickness of about

$$0.15 \frac{\lambda}{n}$$

where $\lambda$ is the wavelength of the incident plane polarised beam (6) and n is the refractive index of said intermediate layer.

8. An apparatus according to claim 7, characterised in that the intermediate layer is made of polystyrene.

9. An apparatus according to claim 8, characterised in that the polystyrene intermediate layer has a thickness of at least 40 nanometers.

10. An apparatus according to any one of the claims 6 through 9, characterised in that the light source (5) is a helium neon laser.

11. An apparatus according to any one of the claims 6 through 10, characterised in that it further comprises a cell (1) for containing liquid, said substrate (4) being provided in said cell (1).

12. An apparatus according to claim 11, characterised in that the substrate (4) comprises silicon on which an intermediate layer of polystyrene is applied.

13. An apparatus according to any one of the claims 6 through 10, characterised in that the substrate comprises a prism (14).

14. An apparatus according to claim 13, characterised in that to the base face of said prism (14) a thin layer (17) of polystyrene is applied.

15. An apparatus according to claim 13 or 14, characterised in that the base face of the prism (14) carries a ring (18) adapted to receive a solution (19) to be examined.

16. An apparatus according to claim 13, characterised in that the prism (14) is made of heavy flint glass.

17. An apparatus according to any one of the claims 13 through 15, characterised in that the prism (14) is made of silicon and the light source (5) is a semiconductor laser for emitting radiation of about 1500 nm.

**Revendications**

1. Un procédé pour déterminer l'épaisseur et/ou le changement d'épaisseur d'une couche mince qui est appliquée sur un élément support, cet élément support et la couche mince qui est appliquée sur celui-ci, étant illuminés par un faisceau de lumière polarisée dans un plan et la lumière réfléchie par l'élément porteur et la couche mince étant détectée, la lumière détectée étant utilisée dans le but d'évaluer l'épaisseur et/ou le changement d'épaisseur de la couche mince, caractérisé en ce que:

    a. le faisceau de lumière (6) polarisée dans un plan est orienté pour faire un angle égal à l'angle de Brewster par rapport à l'interface entre l'élément support (4, 14) et la phase continue;

    b. la lumière (106) réfléchie par l'élément support (4, 14) et la couche mince est divisée en un composant polarisé-p (9) et un composant polarisé-s (10);

    c. les intensités $(I_s)_r$ et $(I_p)_r$ respectives des composants polarisés s et polarisés p réfléchis sont simultanément mesurées; et

    d. une quantité M

$$M = \frac{(I_s)_r - (I_p)_r}{(I_s)_r + (I_p)_r} = \frac{R_s - m * R_p}{R_s + m * R_p}$$

est déterminée dans laquelle:

    $R_s$    est le rapport des intensités $(I_s)_r$ et $(I_s)_i$ des composants s de lumière réfléchis et incidents, respectivement;

    $R_p$    est le rapport des intensités $(I_p)_r$ et $(I_p)_i$ des composants p de lumière incidents et réfléchis, respectivement; et

    m    est le rapport des intensités $(I_p)_i$ et $(I_s)_i$ des composants p et s incidents, respectivement; et

    M    est relié à l'épaisseur et à l'indice de réfraction de la couche mince.

2. Un procédé selon la revendication 1, caractérisé en ce que l'on utilise, dans le but de déterminer le niveau de croissance de couches organiques sur un élément support, un élément support (4, 14) qui a préalablement été revêtu d'une couche intermédiaire mince (17) d'un matériau inorganique transparent, ou d'un matériau polymère organique transparent, la couche intermédiaire (17) ayant une épaisseur telle qu'une relation pratiquement linéaire existe entre la quantité M et l'épaisseur de ladite couche.

3. Un procédé selon la revendication 2, caractérisé en ce que l'élément support est formé de silicium et en ce que la couche mince intermédiaire (17) est une couche transparente d'un matériaux polymère organique dont l'épaisseur est d'environ:

    0,15 λ/n

où:

    λ    est la longueur d'onde du faisceau (6) incident polarisé dans un plan; et

    n    est l'indice de réfraction de ladite couche intermédiaire (17).

4. Un procédé selon l'une quelconque des revendications 1 à 3, caractérisé en ce que m est ajusté à une valeur pour laquelle la valeur maximum de $R_s$ est environ égal à la valeur maximum de $m^* R_p$.

5. Un procédé selon l'une quelconque des revendications 1 à 4, caractérisé en ce qu'un prisme (14) est utilisé comme élément support, la lumière (6) étant dirigée vers le prisme (14) de telle sorte qu'elle le pénètre et le quitte à travers les faces latérales (15, 16) et se réfléchit sur la face de base sur laquelle la couche mince qui doit être mesurée est appliquée.

6. Un appareil pour déterminer l'épaisseur d'une couche comportant un élément support pour supporter ladite couche, une source de lumière pour diriger un faisceau de lumière polarisé dans un plan en direction dudit substrat, des moyens pour fixer l'angle d'incidence du faisceau de lumière de façon à

EP 0 278 577 B1

ce qu'il forme un angle égal à l'angle de Brewster à l'interface entre l'élément support et la phase continue, des moyens pour détecter la lumière réfléchie par ledit substrat, caractérisé en ce que ledit appareil comprend:

a. des moyens d'ajustement du plan de polarisation du faisceau incident (6) de la source de lumière (5);

b. un diviseur de faisceau (8) qui partage le faisceau polarisé réfléchi (106) en un composant (9) polarisé p et en un composant (10) polarisé s;

c. deux détecteurs (11, 12) placés dans le but d'assurer la détection des intensités des composants (9, 10) polarisé p et polarisé s; et

d. une unité de traitement (13) pour déterminer la quantité M:

$$M = \frac{(I_s)_r - (I_p)_r}{(I_s)_r + (I_p)_r} = \frac{R_s - m * R_p}{R_s + m * R_p}$$

dans laquelle:

$R_s$     est le rapport des intensités $(I_s)_r$ et $(I_s)_i$ des composants de lumière réfléchie et incidente s, respectivement;

$R_p$     est le rapport des intensités $(I_p)_r$ et $(I_p)_i$ des composants de lumière incidente et réfléchie p, respectivement; et

m     est le rapport des intensités $(I_p)_i$ et $(I_s)_i$ des composants incidents p et s, respectivement; et

M     est relié à l'épaisseur et à l'indice de réfraction de la couche mince.

7. Un appareil selon la revendication 6, caractérisé en ce que l'élément support (4, 14) est à base de silicium et en ce que la couche intermédiaire (17) est une couche transparente d'un matériau inorganique ou d'un matériau polymère organique, ladite couche intermédiaire ayant une épaisseur d'environ 0,15 λ/n où λ est la longueur d'onde de faisceau (6) incident polarisé dans un plan; et n est l'indice de réfraction de ladite couche intermédiaire.

8. Un appareil selon la revendication 7, caractérisé en ce que la couche intermédiaire est à base de polystyrène.

9. Un appareil selon la revendication 8, caractérisé en ce que la couche intermédiaire de polystyrène a une épaisseur d'au moins 40 nanomètres.

10. Un appareil selon l'une quelconque des revendications 6 à 9, caractérisé en ce que la source lumineuse (5) est un laser hélium-néon.

11. Un appareil selon l'une quelconque des revendications 6 à 10, caractérisé en ce qu'il comprend de plus une cellule (1) qui est présente pour contenir un liquide, laquelle cellule (1) est munie d'un substrat (4).

12. Un appareil selon la revendication 11, caractérisé en ce que le substrat (4) est à base de silicium et en ce que une couche intermédiaire de polystyrène y est appliquée.

13. Un appareil selon l'une quelconque des revendications 6 à 10, caractérisé en ce que le substrat comporte un prisme (14).

14. Un appareil selon la revendication 13, caractérisé en ce qu'une couche mince (17) de polystyrène est appliquée à la face de base dudit prisme (14).

15. Un appareil selon la revendication 13 ou 14, caractérisé en ce que la face de base du prisme (14) supporte un anneau (18) qui est conçu pour recevoir la solution (19) qui doit être soumise à l'examen.

16. Un appareil selon la revendication 13, caractérisé en ce que le prisme (14) est en un verre flint lourd.

9

**17.** Un appareil selon l'une quelconque des revendications 13 à 15, caractérisé en ce que le prisme (14) est à base de silicium et la source de lumière, est un laser semiconducteur pour l'émission de rayons d'à peu près 1500 nm.

**Patentansprüche**

**1.** Verfahren zur Bestimmung der Dicke und/oder Dickenveränderung einer dünnen Schicht, die auf einen Träger aufgebracht ist, wobei der Träger und die darauf aufgebrachte dünne Schicht mit einem planpolarisierten Lichtstrahl bestrahlt und das vom Träger und der dünnen Schicht reflektierte Licht erfasst und zur Bestimmung der Dicke und/oder Dickenveränderung der dünnen Schicht verwendet wird, gekennzeichnet durch folgende Merkmale:

a) der Strahl (6) aus planpolarisiertem Licht ist in einem Winkel gerichtet, der gleich ist dem Brewster-Winkel für die Grenzfläche zwischen dem Träger (4, 14) und der kontinuierlichen Phase,

b) das vom Träger (4, 14) und der dünnen Schicht reflektierte Licht (106) wird in eine p-polarisierte (9) und eine s-polarisierte (10) Komponente geteilt,

c) die jeweiligen Intensitäten $(I_s)_r$ und $(I_p)_r$ der reflektierten s-polarisierten und p-polarisierten Komponenten werden gleichzeitig gemessen, und es wird

d) eine Grösse M entsprechend

$$M = \frac{(I_s)_r - (I_p)_r}{(I_s)_r + (I_p)_r} = \frac{R_s - m * R_p}{R_s + m * R_p}$$

bestimmt, in der

$R_s$     das Verhältnis der Intensitäten $(I_s)_r$ und $(I_s)_i$ der reflektierten bzw. einfallenden s-Komponenten ist,

$R_p$     das Verhältnis der Intensitäten $(I_p)_r$ und $(I_p)_i$ der reflektierten bzw. einfallenden p-Komponenten ist,

m     das Verhältnis der Intensitäten $(I_p)_i$ und $(I_s)_i$ der einfallenden p- bzw. s-Komponenten ist, und

M     von der Dicke und dem Brechungsindex der dünnen Schicht abhängt.

**2.** Verfahren nach Anspruch 1, dadurch gekennzeichnet, dass zur Bestimmung des Wachstumsmasses organischer Schichten auf einem Träger ein Träger (4, 14) verwendet wird, der vorgängig mit einer dünnen Zwischenschicht (17) aus einem transparenten anorganischen Material oder aus einem transparenten organischen Polymer beschichtet wurde, wobei die Zwischenschicht (17) eine solche Dicke hat, dass zwischen der Grösse M und der Dicke der Schicht eine fast lineare Beziehung besteht.

**3.** Verfahren nach Anspruch 2, dadurch gekennzeichnet, dass der Träger aus Silicium besteht und die dünne Zwischenschicht (17) eine transparente Schicht aus einem organischen Polymer ist, die eine Dicke im Bereich von 0,15 $\frac{\lambda}{n}$ aufweist, worin $\lambda$ die Wellenlänge des einfallenden planpolarisierten Strahls (6) und n der Brechungsindex der Zwischenschicht (17) ist.

**4.** Verfahren nach einem der Ansprüche 1-3, dadurch gekennzeichnet, dass m auf einen Wert eingestellt wird, für den der Maximalwert von $R_s$ etwa gleich dem Maximalwert von $m * R_p$ ist.

**5.** Verfahren nach einem der Ansprüche 1-4, dadurch gekennzeichnet, dass ein Prisma (14) als Träger verwendet wird, wobei das Licht (6) derart auf das Prisma (14) geführt wird, dass es durch die jeweiligen Seitenflächen (15, 16) ein- und austritt und an der Basisfläche reflektiert wird, auf der sich die zu messende dünne Schicht befindet.

**6.** Vorrichtung zur Bestimmung der Dicke einer Schicht mit einem Träger, welcher die Schicht trägt, einer Lichtquelle, um einen Strahl aus planpolarisiertem Licht auf den Träger zu richten, Mittel zur Einstellung des Einfallwinkels des Lichtstrahls auf den Brewster-Winkel für die Grenzschicht zwischen dem Träger und einer kontinuierlichen Phase und Mittel zur Erkennung des von dem Träger reflektierten Lichts, dadurch gekennzeichnet, dass die Vorrichtung aufweist:

a) Mittel zur Einstellung der Polarisationsebene des einfallenden Strahls (6) der Lichtquelle (5);

b) einen Strahlteiler (8) zur Teilung des reflektierten polarisierten Lichtstrahls (106) in eine p-polarisierte Komponente (9) und eine s-polarisierte Komponente (10),

c) zwei Detektoren (11, 12) zum Erfassen der Intensitäten der p-polarisierten bzw. der s-polarisierten Komponenten (9, 10), und

d) eine Verarbeitungseinrichtung (13) zur Bestimmung einer Grösse M entsprechend

$$M = \frac{(I_s)_r - (I_p)_r}{(I_s)_r + (I_p)_r} = \frac{R_s - m * R_p}{R_s + m * R_p}$$

in der

$R_s$     das Verhältnis der Intensitäten $(I_s)_r$ und $(I_s)_i$ der reflektierten bzw. einfallenden s-Komponenten ist,

$R_p$     das Verhältnis der Intensitäten $(I_p)_r$ und $(I_p)_i$ der reflektierten bzw. einfallenden p-Komponenten ist, und

m     das Verhältnis der Intensitäten $(I_p)_i$ und $(I_s)_i$ der einfallenden p- bzw. s-Komponenten ist, und

M     von der Dicke und dem Brechungsindex der dünnen Schicht abhängt.

7. Vorrichtung nach Anspruch 6, dadurch gekennzeichnet, dass der Träger (4, 14) aus Silicium besteht und die Zwischenschicht (17) eine transparente Schicht aus einem organischen Polymer ist, die eine Dicke im Bereich von 0,15 $\frac{\lambda}{n}$ aufweist, worin λ die Wellenlänge des einfallenden planpolarisierten Strahls (6) und n der Brechungsindex der Zwischenschicht (17) ist.

8. Vorrichtung nach Anspruch 7, dadurch gekennzeichnet, dass die Zwischenschicht aus Polystyrol gefertigt ist.

9. Vorrichtung nach Anspruch 8, dadurch gekennzeichnet, dass die Polystyrol-Zwischenschicht eine Dicke von mindestens 40 Nanometer besitzt.

10. Vorrichtung nach einem der Ansprüche 6-9, dadurch gekennzeichnet, dass die Lichtquelle (5) ein Helium-Neon-Laser ist.

11. Vorrichtung nach einem der Ansprüche 6-10, dadurch gekennzeichnet, dass sie ferner eine Zelle (1) zur Aufnahme von Flüssigkeit aufweist, wobei der Träger (4) in der Zelle (1) angeordnet ist.

12. Vorrichtung nach Anspruch 11, dadurch gekennzeichnet, dass der Träger (4) Silicium enthält, auf das eine Zwischenschicht aus Polystyrol aufgetragen ist.

13. Vorrichtung nach einem der Ansprüche 6-10, dadurch gekennzeichnet, dass der Träger ein Prisma (14) umfasst.

14. Vorrichtung nach Anspruch 13, dadurch gekennzeichnet, dass auf die Basisfläche des Prisma (14) eine dünne Schicht (17) aus Polystyrol aufgetragen ist.

15. Vorrichtung nach Anspruch 13 oder 14, dadurch gekennzeichnet, dass die Basisfläche des Prisma (14) einen Ring (18) besitzt, der zur Aufnahme einer zu untersuchenden Lösung (19) ausgebildet ist.

16. Vorrichtung nach Anspruch 13, dadurch gekennzeichnet, dass das Prisma (14) aus schwerem Flintglas hergestellt ist.

17. Vorrichtung nach eimen der Ansprüche 13 bis 15 dadurch gekennzeichnet, dass das Prisma (14) aus Silicium gefertigt ist und die Lichtquelle (5) ein Halbleiter-Laser für das Aussenden einer Strahlung von etwa 1 500 nm ist.

## fig.1

## fig.2

fig.3